# EUROPÄISCHE PATENTSCHRIFT

(11) **EP 1 356 372 B1**
(45) Veröffentlichungstag und Bekanntmachung des Hinweises auf die Patenterteilung: **27.07.2011**
(21) Anmeldenummer: 02712730.7
(22) Anmeldetag: 29.01.2002
(51) Int. Cl.: G06F 3/12

(54) **DIE ERFINDUNG BETRIFFT EIN VERFAHREN ZUM VERARBEITEN VON DRUCKAUFTRÄGEN IN SERVERBASIERTEN NETZWERKEN SOWIE EIN SERVERBASIERTES NETZWERK.**
METHOD FOR PROCESSING PRINTING ORDERS IN SERVER-BASED NETWORKS, AND CORRESPONDING SERVER-BASED NETWORK
PROCEDE DE TRAITEMENT D'ORDRES D'IMPRESSION DANS DES RESEAUX BASES SUR SERVEURS ET RESEAU BASE SUR SERVEURS

(30) Priorität: 29.01.2001 DE 10105648
(43) Veröffentlichungstag der Anmeldung: 29.10.2003
(60) Teilanmeldung: 10186077.3
(73) Patentinhaber: Thinprint AG, 10559 Berlin (DE)
(72) Erfinder: MICKELEIT, Carsten, 12205 Berlin (DE)
(74) Vertreter: Gulde, Klaus W.
(86) Internationale Anmeldenummer: PCT/DE2002/000364
(87) Internationale Veröffentlichungsnummer: WO 2002/061569

(56) Entgegenhaltungen:
- EP-A- 0 838 774
- DE-A- 19 911 462

## Beschreibung

Die Erfindung betrifft ein Verfahren zum Verarbeiten von Druckaufträgen in serverbasierten Netzwerken sowie ein serverbasiertes Netzwerk.

Serverbasierte Netzwerkarchitekturen sind - im Gegensatz zu herkömmlichen Fileservern oder Client/Server-Architekturen - dadurch gekennzeichnet, daß Anwendungen nicht lokal auf den Endgeräten ausgeführt werden, sondern zentral auf einem Server. Lediglich die Präsentation erfolgt auf dem lokalen Endgerät. Neben der Bildschirmpräsentation besteht die Präsentationsform der Druckausgabe, die auch auf dem lokalen Endgerät ausgeführt werden kann. So können die Druckaufträge bei den serverbasierten Netzwerkarchitekturen über lokal angeschlossene Druckgeräte oder Netzwerkdruckgeräte, die wiederum als lokal vernetzte oder als vernetzte Remote-Geräte eingerichtet sein können, ausgegeben werden, wobei die Erzeugung des Druckauftrages stets auf dem Server erfolgt.

Die Erzeugung eines Druckauftrages in genannten Netzwerken auf der Basis von MS Windows Betriebssystemen erfolgt stets in drei Phasen, die auf dem Server vollzogen werden:
1. Anwendungsbezogene Erstellung der Seitendarstellung, bei dem der Druckauftrag in ein EMF-Dateiformat (enhanced Metafile) umgesetzt wird.
2. Vorschaumöglichkeit der später zu druckenden Seite auf dem Bildschirm unter Verwendung der EMF-Datei.
3. Druckerspezifische Aufbereitung (Rendering), bei der die EMF-Datei mittels des gerätespezifischen Druckertreibers in eine RAW-Datei umgewandelt wird.

Der aufbereitete Druckauftrag wird anschließend an das Endgerät übermittelt und dort ausgegeben.

Bei der Verarbeitung der Druckaufträge in serverbasierten Netzwerken treten unterschiedliche Probleme auf. So müssen beispielsweise alle auf Seiten des Clients vorhandene Druckgeräte unterstützt werden, d. h. für jedes Druckgerät muß auf dem Server ein entsprechender Druckertreiber installiert sein. Eine Vielzahl von Druckertreibern führen zu Konflikten.

Für Druckgeräte, die bidirektional kommunizieren, existieren keine Treiber für Terminal Server (NT4 oder 2000), so daß diese in serverbasierten Netzwerken nicht verwendet werden können.

Für den Nutzer eines Endgerätes ist die eigenständige Installation eines lokalen Druckgerätes in der Regel nur möglich, wenn der Treiber für das betreffende Druckgerät bereits auf dem Server vorhanden ist und somit die Installation unterstützt wird.

Um derartige Probleme zu vermeiden, ist es bekannt, auf dem Server einen pdf-writer als Standarddrucker zu installieren. Druckaufträge aus beliebigen Anwendungen werden, wie üblich, in eine EMF-Datei umgesetzt, und an den pdf-writer übergeben. Diese Anwendung erstellt aus der EMF-Datei ein pdf-Dokument, das an das Endgerät übermittelt wird. Am Endgerät kann dieses Datenformat mittels eines pdf-Viewers angesehen oder mit Hilfe des installierten Druckertreibers an einen Port bzw. ein Druckgerät zur Druckausgabe weitergeleitet werden.

Durch dieses Vorgehen werden zwar Konflikte der Druckertreiber vermieden, jedoch sind dadurch andere Nachteile gegeben, die den erzielten Vorteil überwiegen können. So ist durch die Umleitung der Daten über den pdf-writer in der Regel ein Qualitätsverlust nicht zu vermeiden, so daß für bestimmte Anwendungen dieses Vorgehen ausgeschlossen ist. Weiterhin werden dedizidierte Druckserver und Netzwerkdrucker von diesem Verfahren nicht unterstützt. Es ist kein Streaming, d.h. eine Übermittlung der auszudruckenden Datei in kleineren Paketen möglich, so daß zum Ausdruck der Datei viel Zeit benötigt wird. Um dieses Verfahren anwenden zu können, benötigt jedes Endgerät einen Acrobat Reader, was die ohnehin geringe Kapazität der Endgeräte bei derartigen Netzwerkarchitekturen zusätzlich verringert. Letztendlich bedingt dieses Verfahren sowohl beim Server als auch beim Client einen hohen CPU-Ressourcenverbrauch.

In der Europäischen Patentanmeldung EP 0 838 774 A2 wird ebenfalls die Verwendung des PDF (Portable Document Format) als portables Format für die Übertragung von elektronischen Dokumenten vorgeschlagen. Das portable Format wird bei dieser Lösung eingesetzt, um elektronische Dokumente auch an Empfangsgeräte senden zu können, die dem Absender nicht bekannt sind. Der Sender leitet beispielsweise die elektronischen Dokumenten in dem portablen PDF an einen Server, der das Empfangsgerät ermittelt und erforderlichenfalls eine Formatwandlung an den elektronischen Dokumenten vornimmt. Ist das Empfangsgerät ein Drucker, werden die elektronischen Dokumente in eine Druckerbefehlssprache (bspw. PCL oder Postscipt) umgesetzt.

Daher ist es Aufgabe der vorliegenden Erfindung, ein Verfahren zur Verarbeitung von Druckaufträgen in servierbasierten Netzwerken sowie ein entsprechendes Netzwerk zu schaffen, bei dem die Nachteile der Verfahren zur Druckverarbeitung nach dem Stand der Technik vermieden werden. Diese Aufgabe wird durch die Merkmale des Anspruchs 1 bzw. des Anspruchs 13 gelöst.

Dazu ist ein erfindungsgemäßes Verfahren zum Verarbeiten von Druckaufträgen in serverbasierten Netzwerken vorgesehen, bei dem ein von einer Anwendung auf einem Server generierter Druckauftrag im EMF-Format mit einer Kennung versehen wird, die den Druckauftrag als RAW-Format erscheinen läßt. Der Druckauftrag im vermeintlichen RAW-Format wird an ein Endgerät (Client) übermittelt. Dort wird die Kennung entfernt und es erfolgt die Umsetzung der EMF-Datei durch einen lokalen Druckertreiber in das druckgerätspezifische RAW-Format, so daß der Druckauftrag von einem lokalen Druckgerät ausgegeben werden kann.

Alternativ kann das Verfahren derart ausgestaltet sein, daß im Rahmen der Verarbeitung der Druckaufträge beim Server auch Druckaufträge im EMF-Format an den Client übertragen werden können, wo diese dann mittels eines entsprechenden lokalen Druckertreibers umgesetzt werden.

Das Versehen des Druckauftrages im EMF-Format mit einer Kennung zur "Tarnung" als RAW-Format erfolgt unmittelbar, z.B. im Rahmen der Verarbeitung durch den Druckprozessor, oder durch einen erfindungsgemäßen allgemeinen Druckertreiber, der keine druckgerätspezifische Verarbeitung vornimmt, sondern dem Druckauftrag die Kennung sowie zusätzliche Informationen z.B. hinsichtlich der Formatierung anfügt. Es gibt auch die Möglichkeit, daß die Kennung unmittelbar angefügt wird und zusätzlich der allgemeine Druckertreiber durchlaufen wird, der dann nur die Zusatzinformationen anfügt.

Durch das erfindungsgemäße Verfahren muß ein druckgerätspezifischer Druckertreiber vorteilhafterweise lediglich auf einem entsprechenden Endgerät installiert sein. Auf dem Server ist, je nach Ausführungsform, nur der von der Anwendung bzw. dem Druckgerät unabhängiger allgemeiner Druckertreiber installiert.

Nach einer vorteilhaften Ausgestaltung des erfindungsgemäßen Verfahrens wird der mit dem RAW-Format getarnte Druckauftrag an einen Druckserver weitergeleitet, auf dem die tatsächliche Generierung der RAW-Datei unter Entfernung der Kennung erfolgt, die erst dann an das Endgerät übermittelt wird, um den Ausdruck am lokalen Druckgerät zu bewirken. Vom Endgerät wird vorab die Information an den Druckserver übermittelt, welcher Druckertreiber angesprochen werden soll.

Diese Ausgestaltung des Verfahrens kann auch mit über das Internet erreichbare Druckgeräte erfolgen, indem die RAW-Datei an diesen über das Internet übermittelt wird.

Diese Ausgestaltung des Verfahrens ist für Endgeräte vorgesehen, die für einen normalen Druckprozeß zu schwach ausgelegt sind. Der Benutzer des Endgerätes wird von Administrationsnotwendigkeiten entlastet und der Druckauftrag kann individuell für das am Endgerät angeschlossene Druckgerät generiert werden. Der Anwendungsserver wird zudem aufgabengemäß von der Verarbeitung der Druckaufträge entlastet.

Der Transport der getarnten EMF-Datei zwischen Server und Client kann online, als Datei oder als Stream, sowie offline, insbesondere in Form von Emails erfolgen.

Eine weitere Ausgestaltung des erfindungsgemäßen Verfahrens besteht darin, bei Endgeräten, die über kein angeschlossenes Druckgerät verfügen, wie z.B. bei mobilen Endgeräten, die vom Benutzer unterwegs genutzt werden, einen Ausdruck von einem beliebigen nächstgelegenen Druckgerät zu ermöglichen. Dazu wird die getarnte EMF-Datei über einen Mail- oder Faxserver, der die Kennung entfernt und ein Fax bzw. eine Mail generiert, zu einem Faxgerät oder einer Mailbox versendet, wobei ggf. auch eine Umwandlung in eine pdf-Datei möglich ist.

Nach einer Ausführungsform für den Fall, daß das Clientgerät nicht in der Lage ist, den Druckauftrag auch am Bildschirm darzustellen, so sieht das Verfahren vor, parallel zur Übertragung des Druckauftrages ein Bitmap zu übertragen, das die Seiten darstellt, da Bitmaps in der Regel auf jedem Endgerät mit grafischen Darstellungsmöglichkeiten ausgegeben werden können.

Um die zu übertragende Datenmenge so gering wie möglich zu halten, überträgt z.B. das mobile Clientendgerät seine Anzeigeinformation zum Server. Dieser erzeugt aus dem Dokument dann ein Bitmap, welches genau den Anzeigemöglichkeiten und dem Bildschirmformat entspricht. Dadurch wird nur die wirklich notwendige Datenmenge verursacht und übertragen. Das Verfahren sieht weiterhin vor, dass mit Hilfe einer sogenannten Viewer-Komponente der Druckauftrag auf dem Clientrechner vor den Ausdruck angesehen werden kann. Dadurch lässt sich das Verfahren auch für Reportsysteme verwenden, die auf dem Clientrechner über keine Visualisierung verfügen. Dies ist in der Regel dann der Fall, wenn herkömmliche Reportsysteme in Webarchitekturen angewendet werden sollen.

Weiterhin ist vorzugsweise vorgesehen, daß der EMF-Druckauftrag komprimiert abgespeichert wird und als Dokumentenaustauschformat verwendet wird. Dazu wird dem Client lediglich das Dokument sowie die Client-Anwendung zusammen mit den Viewer zur Verfügung gestellt._Der Viewer dekomprimiert die Daten und zeigt die EMF-Datei an. Die Daten können dann von einen beliebigen, auf dem Client installierten lokalen Druckertreiber weiterverarbeitet werden. Die Umsetzung der EMF-Datei erfolgt dann durch einen lokalen Druckertreiber in das druckgerätspezifische RAW-Format, so daß der Druckauftrag von einem lokalen Druckgerät ausgegeben werden kann.

Die Übermittlung des Druckauftrages vom Server an den Client kann vorzugsweise auch in komprimierter Form erfolgen.

Das erfindungsgemäße serverbasierte Netzwerk, das mit einem MS Windows Betriebssystem versehen ist, besteht aus einem Server, einer Vielzahl von Endgeräten, vorzugsweise in Form von PCs, und direkt oder indirekt angeschlossenen lokalen Druckgeräten o.dgl., wobei auf dem Server Daten abgelegt sind, die Druckaufträge im EMF-Format mit einer Kennung versehen, die diese Druckaufträge im RAW-Format erscheinen lassen, und wobei auf dem Endgerät Daten abgelegt sind, die die Kennung von den Druckaufträgen entfernen, so daß die Druckaufträge vom lokalen Druckertreiber, der auf dem Endgerät befindlich ist, verarbeitet werden können.

Vorzugsweise ist das Modul zum Versehen von Druckaufträgen mit einer Kennung im Rahmen des Druckprozessors angeordnet oder in Form eines erfindungsgemaßen allgemeinen Druckertreibers für alle Anwendungen und Druckgeräte des Netzwerkes auf dem Server abgelegt, , wobei der erfindungsgemäße allgemeine Druckertreiber auch lediglich zum Erhalt von zusätzlichen Informationen durchlaufen werden kann und die Kennung im Druckprozessor angefügt wird.

Nach einer Ausführungsform des erfindungsgemäßen Netzwerkes ist zwischen dem Server und den Endgeräten ein Druckserver, ein Faxserver oder ein Mailserver angeordnet, auf dem Daten abgelegt sind, die von vom Server übermittelten Druckaufträgen im EMF-Format mit einer Kennung, die diese im RAW-Format erscheinen läßt, die Kennung entfernen. Anschließend erfolgt die Verarbeitung durch den lokalen Druckertreiber oder die Generierung eines Faxes bzw. einer Mail. Nach der Verarbeitung erfolgt das Weiterleiten der entsprechenden Datei an das Endgerät, das Fax oder die Mailbox, wobei auf dem Endgerät befindliche Daten mit Informationen über das verwendete Druckgerät vor Verarbeitung durch einen Druckertreiber von diesem an den Druckserver übermittelt werden. Das Druckgerät kann über Internet an das Netzwerk angeschlossen sein.

Vorzugsweise kann ein Clientrechner dergestalt aufgestellt sein, daß dieser von beliebigen Servern Druckaufträge als Email erhält und diese auf beliebigen Ausgabegeräten (Drucker, Fax, Archiv) ausgeben kann. Die Form der Ausgabe, kann dabei im Betreff der Email spezifiziert werden.

Weitere vorteilhafte Ausgestaltungen sind in den Unteransprüchen gekennzeichnet.

Nachstehend wird die Erfindung anhand von Schaubildern näher erläutert.

Es zeigen
- Fig.: 1 in einem Schaubild die Verarbeitung eines Druckauftrages nach dem Stand der Technik und

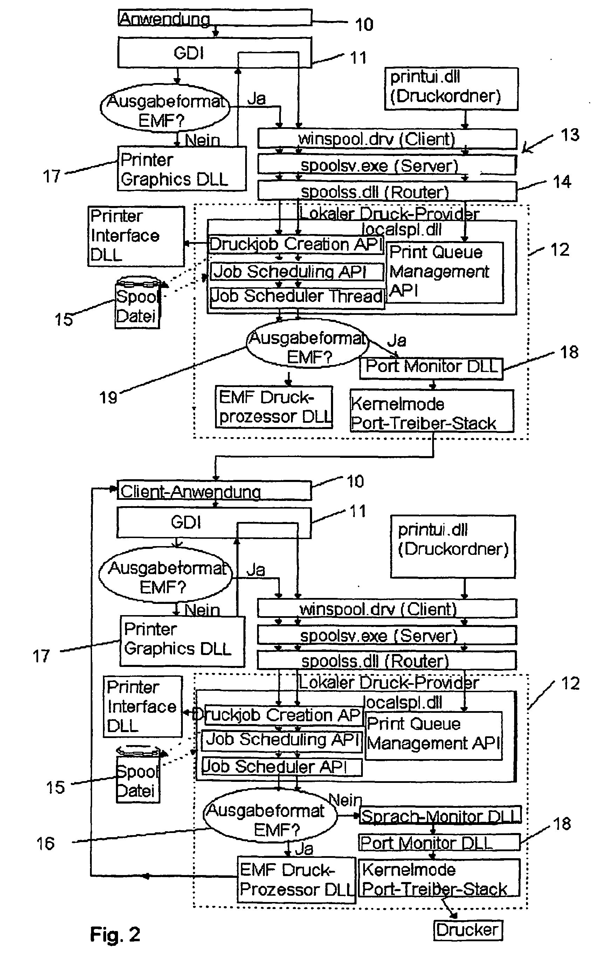

- Fig. 2: in einem Schaubild die Verarbeitung eines Druckauftrages nach einer Ausführungsform des erfindungsgemäßen Verfahrens.

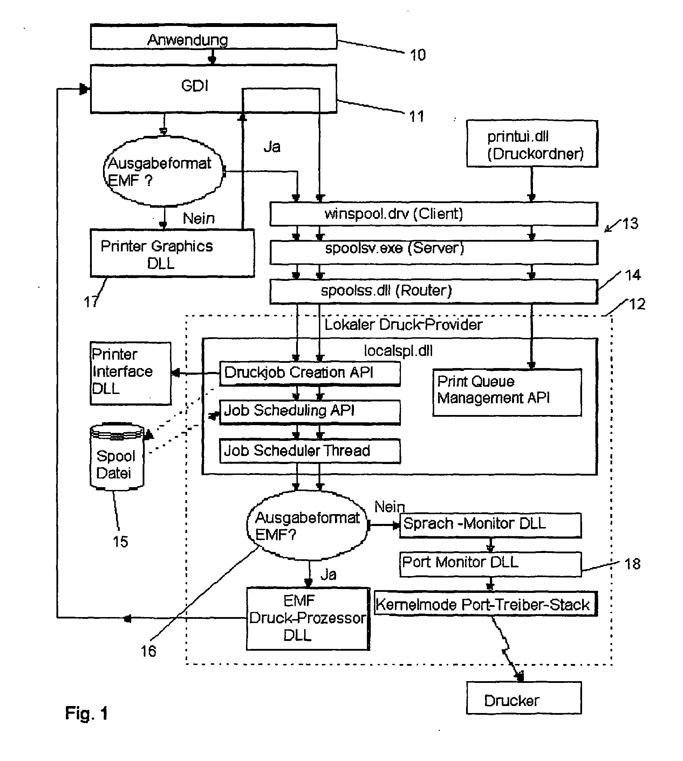

In Fig. 1 ist ein Druckprozeß nach dem Stand der Technik unter MS Windows dargestellt. Durch eine beliebige Anwendung 10 wird die Generierung eines Druckauftrages dadurch ausgelöst, daß diese Funktionen des Graphics Driver Interface (GDI) 11 aufruft. Unabhängig vom Ausgabeformat des Druckauftrages durch die Anwendung 10, erzeugt der lokale Druckprovider 12 nachdem der Druckauftrag einen Spooler Prozeß 13 und einen Router 14 durchlaufen hat eine sogenannte Spooldatei 15, um die Zeit des Druckens für die Anwendung 10 möglichst klein zu halten. Anschließend wird diese Spooldatei 15 vom Druckprozessor 16 gelesen und wenn der Druckauftrag im EMF Format vorliegt, wird die Spooldatei 15 durch den Druckprozessor 16 zurück an das GDI 11 gesendet. Das GDI 11 erzeugt dann mit Hilfe der Printer Graphics DLL 17 eine RAW Datei. Diese Datei gelangt daraufhin ohne nochmaliges Spoolen durch den lokalen Druckprovider 12. Sofern der Druckauftrag gemäß Spooldatei 15 als RAW Datei vorliegt, wird diese ohne nochmaliges ansprechen des GDI 11 über den Port Monitor 18 zum Drucker bzw. im Netzwerk an den Client und dessen Drucker gesandt.

Bei dem erfindungsgemäßen Verfahren gemäß Fig. 2 wird das Verfahren nach dem Stand der Technik (Fig. 1) derart modifiziert, daß ein EMF-Druckauftrag nach Durchlaufen des lokalen Druckproviders 12 durch einen efindungsspezifischen Druckprozessor 19 als RAW-Datei getarnt und dann über den Port Monitor 18 an die Anwendung des Clients weitergeleitet wird. Durch die Client-Anwendung 10 wird dieser Auftrag dann wieder in den lokalen Windows Prozeß des Clients eingeleitet, so als wenn der Druckauftrag auf dem Client und nicht auf dem Server generiert worden wäre. Die weitere Verarbeitung erfolgt beim Client gemäß des Verfahrens nach Fig. 1.

Bei den vorstehend beschriebenen Fig. 1 und 2 wurden zur besseren Übersicht nur die für das erfindungsgemäße Verfahren wesentlichen Elemente mit Bezugszeichen versehen.

### Bezugszeichenliste

| | |
|---|---|
| Anwendung | 10 |
| GDI | 11 |
| Druckprovider | 12 |
| Spooler Prozeß | 13 |
| Router | 14 |
| Spooldatei | 15 |
| Druckprozessor | 16 |
| Printer Graphics DLL | 17 |
| Port Monitor | 18 |
| efindungsspezifischen Druckprozessor | 19 |
| | |
| | |
| | |
| | |
| | |
| | |

## Patentansprüche

1. Verfahren zum Verarbeiten von Druckaufträgen in serverbasierten Netzwerken,
**dadurch gekennzeichnet,**
**daß** ein von einer Anwendung auf dem Server des Netzwerkes generierter Druckauftrag im EMF-Format mit einer Kennung versehen wird, die den Druckauftrag als RAW-Format erscheinen läßt, daß der Druckauftrag im vermeintlichen RAW-Format an ein Endgerät des Netzwerkes übermittelt wird, wo die Kennung entfernt wird und anschließend die Umsetzung der EMF-Datei durch einen lokalen Druckertreiber in das druckgerätspezifische RAW-Format erfolgt, oder daß der mit der Kennung versehene Druckauftrag an einen Druckserver weitergeleitet wird, wo die Kennung entfernt wird und anschließend die Umsetzung der EMF-Datei durch einen lokalen Druckertreiber in das druckgerätspezifische RAW-Format erfolgt, und die Datei im RAW-Forme anschließend an das Endgerät übermittelt wird, oder daß im Rahmen der Verarbeitung von Druckaufträgen auf dem Server auf der Basis des Windows-Betriebssystems Druckaufträge im EMF-Format vom Server an den Client übertragen werden, wo diese dann mittels eines entsprechenden lokalen Druckertreibers in ein
druckgerätespezifisches RAW-Format umgesetzt werden.

2. Verfahren nach Anspruch 1, **dadurch gekennzeichnet,**
**daß** die Kennung dem Druckauftrag durch einen nicht druckgerätespezifischen Druckertreiber beigefügt wird, der ansonsten keine druckgerätspezifische Verarbeitung des Druckauftrages vornimmt.

3. Verfahren nach Anspruch 2, **dadurch gekennzeichnet, daß** der nicht druckgerätespezifische Druckertreiber dem Druckauftrag neben der Kennung zusätzliche Informationen anfügt.

4. Verfahren nach Anspruch 1, **dadurch gekennzeichnet,**
**daß** die Kennung dem Druckauftrag im Rahmen des Druckprozessors angefügt wird.

5. Verfahren nach Anspruch 4, **dadurch gekennzeichnet, daß** der Druckauftrag durch einen nicht druckgerätespezifische Druckertreiber verarbeitet wird, der dem Druckauftrag zusätzliche Informationen anfügt

6. Verfahren nach einem der Ansprüche 1 bis 5, **dadurch gekennzeichnet, daß** der Transport der mit der Kennung getarnten EMF-Datei zwischen Server und Client online, als Datei oder als Stream, oder offline, erfolgt.

7. Verfahren nach Anspruch 6, **dadurch gekennzeichnet, daß** der Transport der mit der Kennung getarnten EMF-Datei zwischen Server und Client offline in Form von Emails erfolgt.

8. Verfahren nach Anspruch 6 oder 7, **dadurch gekennzeichnet, daß** der mit der Kennung versehene Druckauftrag an einen Mail- oder Faxserver weitergeleitet wird, wo die Kennung entfernt wird und anschließend eine Mail oder ein Fax generiert wird, die bzw. das an eine Mailbox oder ein Faxgerät gesendet wird.

9. Verfahren nach einem der Ansprüche 1 bis 8, **dadurch gekennzeichnet, daß** parallel zur Übertragung des mit der Kennung versehenen Druckauftrages ein Bitmap übertragen wird, das die zu druckenden Seiten darstellt, zur Darstellung auf dem Endgerät.

10. Verfahren nach Anspruch 9, **dadurch gekennzeichnet, daß** das Endgerät vorab seine Anzeigeinformation zum Server überträgt und der Server ein Bitmap erzeugt, welches genau den Anzeigemöglichkeiten und dem Bildschirmformat des Endgerätes entspricht.

11. Verfahren nach einem der Ansprüche 1 bis 10, **dadurch gekennzeichnet, daß** der mit der Kennung versehene Druckauftrag komprimiert abgespeichert wird und als Dokumentenaustauschformat verwendet wird, wobei dem Endgerät das Dokument sowie die Anwendung zusammen mit einem Viewer zur Verfügung gestellt wird.

12. Verfahren nach einem der Ansprüche 1 bis 11, **dadurch gekennzeichnet, daß** die Übermittlung des Druckauftrages vom Server an den Client in komprimierter Form erfolgt.

13. Serverbasiertes Netzwerk,
**dadurch gekennzeichnet,**
**daß** das Netzwerk aus einem Server, einer Vielzahl von Endgeräten und direkt oder indirekt angeschlossenen lokalen Druckgeräten besteht, wobei ein Druckprozessor (19) des Servers oder ein auf dem Server installierter allgemeiner Druckertreiber derart eingerichtet ist,
**daß** Druckaufträge im EMF-Format mit einer Kennung versehen werden, die diese Datei als RAW-Format erscheinen lassen, und
wobei auf dem Endgerät eine Client-Anwendung (10) installiert ist, die die Kennung von dem Druckauftrag entfernt, so daß der Druckauftrag vom lokalen Druckertreiber, der auf dem Endgerät befindlich ist, verarbeitet werden kann.

14. Netzwerk nach Anspruch 13, **dadurch gekennzeichnet, daß** der Druckertreiber Informationen mit verarbeitet und der allgemeine Druckertreiber lediglich zum Anfügen von zusätzlichen Informationen durchlaufen und die Kennung im Druckprozessor (19) angefügt wird.

15. Netzwerk nach Anspruch 13 oder 14, **dadurch gekennzeichnet, daß** zwischen dem Server und den Endgeräten ein Druckserver, ein Faxserver oder ein Mailserver angeordnet ist, wobei Druckserver, Faxserver oder Mailserver derart eingerichtet sind, daß von vom Server übermittelten Druckaufträgen im EMF-Format mit der Kennung, die diese im RAW-Format erscheinen läßt, die Kennung entfernt wird, daß nach einer Verarbeitung durch den lokalen Druckertreiber oder der Generierung eines Faxes bzw. einer Mail die Weiterleitung der Datei an das Endgerät, das Fax oder die Mailbox erfolgt, wobei auf dem Endgerät befindliche.Daten mit Informationen über das verwendete Druckgerät vor Verarbeitung durch einen Druckertreiber von diesem an den Druckserver übermittelt werden.

16. Serverbasiertes Netzwerk nach einem der Ansprüche 13 bis 15,
**dadurch gekennzeichnet, dass**
zwischen dem Server und den Endgeräten ein Druckserver, ein Faxserver oder ein Mailserver angeordnet ist, auf dem Daten abgelegt sind, die es im Druck-, Fax- oder Mailserver angeordneten Mitteln zur Datenverarbeitung ermöglichen.
von vom Server übermittelten Druckaufträgen im EMF-Format mit der Kennung, die diese im RAW-Format erscheinen lässt, die Kennung zu entfernen, dass nach einer Verarbeitung durch den lokalen Druckertreiber oder der Generierung eines Fax bzw. einer Mail die Weiterleitung der Datei an das Endgerät, das Fax oder die Mailbox erfolgt, wobei auf dem Endgerät befindliche Daten mit Informationen über das verwendete Druckgerät vor Verarbeitung durch einen Druckertreiber von diesem an den Druckserver übermittelt werden.

## Claims

1. Method for processing print jobs in server-based networks,
**characterized in that**
a print job generated by an application on the server of the network and being in the EMF format is provided with an identification which makes the print job appear as RAW format, that the print job in the alleged RAW format is transmitted to a terminal of the network where the identification is removed and the EMF file is subsequently converted to the printer-specific RAW format by a local printer driver, or that the print job provided with the identification is passed on to a print server where the identification is removed and the EMF file is subsequently converted to the printer-specific RAW format by a local printer driver, and the file in the RAW format is subsequently transmitted to the terminal, or that within the framework of processing print jobs on the server on the basis of the Windows operating system print jobs in the EMF format are transmitted from the server to the client, where these are then converted to a printer-specific RAW format by means of a corresponding local printer driver.

2. Method according to claim 1, **characterized in that** the identification is attached to the print job by a non-printer-specific printer driver, which does otherwise not perform a printer-specific processing of the print job.

3. Method according to claim 2, **characterized in that** the non-printer-specific printer driver attaches additional information to the print job in addition to the identification.

4. Method according to claim 1, **characterized in that** the identification is attached to the print job within the framework of the print processor.

5. Method according to claim 4, **characterized in that** the print job is processed by a non-printer-specific printer driver attaching additional information to the print job.

6. Method according to one of claims 1 to 5, **characterized in that** the transport of the EMF file disguised with the identification between the server and the client is carried out online, as file or as stream, or offline.

7. Method according to claim 6, **characterized in that** the transport of the EMF file disguised with the identification between the server and the client is carried out offline in the form of e-mails.

8. Method according to claim 6 or 7, **characterized in that** the print job provided with the identification is passed on to a mail or fax server, where the identification is removed and a mail or fax is generated subsequently, which is sent to a mail box or fax machine.

9. Method according to one of claims 1 to 8, **characterized in that** a bitmap is transmitted in parallel with the transmission of the print job provided with the identification, which represents the pages to be printed for being displayed on the terminal.

10. Method according to claim 9, **characterized in that** the terminal transmits its display information to the server in advance and the server generates a bitmap which corresponds exactly to the display possibilities and the display screen format of the terminal.

11. Method according to one of claims 1 to 10, **characterized in that** the print job provided with the identification is stored in a compressed manner and used as a document exchange format, wherein the document and the application together with a viewer are made available to the terminal.

12. Method according to one of claims 1 to 11, **characterized in that** the transmission of the print job from the server to the client is performed in a compressed manner.

13. Server-based network,
**characterized in that**
the network is formed of a server, a plurality of terminals and directly or indirectly connected local printers, wherein a print processor (19) of the server or a general printer driver installed on the server is configured such that print jobs in the EMF format are provided with an identification which makes this file appear as RAW format, and wherein a client application (10) is installed on the terminal which removes the identification from the print job so that the print job can be processed by the local printer driver located on the terminal.

14. Network according to claim 13, **characterized in that** the printer driver processes information and the general printer driver is passed through merely for attaching additional information and the identification is attached in the print processor (19).

15. Network according to claim 13 or 14, **characterized in that** a print server, a fax server or a mail server are disposed between the server and the terminals, wherein the print server, fax server or mail server are configured such that the identification of print jobs transmitted by the server and being in the EMF format, which makes them appear in the RAW format, is removed from the print jobs, that after a processing by the local printer driver or the generation of a fax or a mail the file is passed on to the terminal, the fax or the mail box, wherein data with information about the used printer provided on the terminal are transmitted by it to the print server prior to the processing by the printer driver.

16. Server-based network according to one of claims 13 to 15, **characterized in that** a print server, a fax server or a mail server are disposed between the server and the terminals, on which data are stored allowing data processing means disposed in the print, fax or mail server to remove the identification of print jobs transmitted by the server and being in the EMF format, which makes them appear in the RAW format, from the print jobs, that after a processing by the local printer driver or the generation of a fax or a mail the file is passed on to the terminal, the fax or the mail box, wherein data with information about the used printer provided on the terminal are transmitted by it to the print server prior to the processing by the printer driver.

## Revendications

1. Procédé de traitement d'ordres d'impression dans des réseaux basés sur des serveurs, **caractérisé en ce**
**qu'**un ordre d'impression au format EMF généré par une application sur le serveur du réseau est doté d'un identifiant qui fait apparaître l'ordre d'impression en format RAW, que l'ordre d'impression au prétendu format RAW est transmis à un terminal du réseau où l'identifiant est supprimé, la transformation du fichier EMF dans le format RAW spécifique à l'imprimante par un pilote d'impression local s'effectuant ensuite, ou que l'ordre d'impression doté de l'identifiant est transféré à un serveur d'impression où l'identifiant est supprimé, la transformation du fichier EMF dans le format RAW spécifique à l'imprimante par un pilote d'impression local s'effectuant ensuite, et le fichier en format RAW étant ensuite transmis au terminal, ou que des ordres d'impression au format EMF sont transmis du serveur au client, dans le cadre du traitement d'ordres d'impression sur le serveur sur la base du système d'exploitation Windows, où ceux-ci sont ensuite transformés dans un format RAW spécifique à l'imprimante moyennant un pilote d'impression local correspondant.

2. Procédé selon la revendication 1, **caractérisé en ce que** l'identifiant est ajouté à l'ordre d'impression par un pilote d'imprimante non spécifique aux imprimantes qui, à part cela, n'effectue aucun traitement spécifique aux imprimantes de l'ordre d'impression.

3. Procédé selon la revendication 2, **caractérisé en ce que** le pilote d'imprimante non spécifique aux imprimantes ajoute des informations supplémentaires à l'ordre d'impression outre l'identifiant.

4. Procédé selon la revendication 1, **caractérisé en ce que** l'identifiant est ajouté à l'ordre d'impression dans le cadre du processeur d'impression.

5. Procédé selon la revendication 4, **caractérisé en ce que** l'ordre d'impression est traité par un pilote d'imprimante non spécifique aux imprimantes qui ajoute des informations supplémentaires à l'ordre d'impression.

6. Procédé selon l'une des revendications 1 à 5, **caractérisé en ce que** le transport du fichier EMF dissimulé moyennant l'identifiant entre le serveur et le client s'effectue en ligne, en tant que fichier ou flux continu (stream), ou hors ligne.

7. Procédé selon la revendication 6, **caractérisé en ce que** le transport du fichier EMF dissimulé moyennant l'identifiant entre le serveur et le client s'effectue hors ligne, sous forme d'e-mails.

8. Procédé selon la revendication 6 ou 7, **caractérisé en ce que** l'ordre d'impression doté d l'identifiant est transféré à un serveur d'e-mail ou de fax où l'identifiant est supprimé, et un e-mail ou un fax est généré ensuite qui est envoyé à une boîte aux lettres électronique ou à un téléfax.

9. Procédé selon l'une des revendications 1 à 8, **caractérisé en ce qu'**un bitmap affichant les pages à imprimer est transmis parallèlement à la transmission de l'ordre d'impression doté de l'identifiant, pour l'affichage sur le terminal.

10. Procédé selon la revendication 9, **caractérisé en ce que** le terminal transmet préalablement son information d'affichage au serveur et le serveur génère un bitmap correspondant précisément aux possibilités d'affichage et au format d'écran du terminal.

11. Procédé selon l'une des revendications 1 à 10, **caractérisé en ce que** l'ordre d'impression doté de l'identifiant est sauvegardé sous forme comprimée et utilisé en tant que format d'échange de documents, le document et l'application étant fournis au terminal conjointement avec une visionneuse.

12. Procédé selon l'une des revendications 1 à 11, **caractérisé en ce que** la transmission de l'ordre d'impression du serveur au client s'effectue sous forme comprimée.

13. Réseau basé sur serveurs,
**caractérisé en ce que**
le réseau consiste en un serveur, une pluralité de terminaux et d'imprimantes locales connectées directement ou indirectement, un processeur (19) d'impression du serveur ou un pilote d'imprimante général installé sur le serveur étant configuré de telle façon que des ordres d'impression au format EMF soient dotés d'un identifiant faisant apparaître ce fichier en format RAW, et une application (10) de client étant installée sur le terminal qui supprime l'identifiant de l'ordre d'impression de sorte que l'ordre d'impression puisse être traité par le pilote d'impression local qui se trouve sur le terminal.

14. Réseau selon la revendication 13, **caractérisé en ce que** le pilote d'impression traite des informations et le pilote d'impression général est seulement parcouru pour ajouter des informations supplémentaires et l'identifiant est ajouté dans le processeur (19) d'impression.

15. Réseau selon la revendication 13 ou 14, **caractérisé en ce qu'**un serveur d'impression, un serveur de téléfax, ou un serveur d'e-mail est disposé entre le serveur et les terminaux, le serveur d'impression, le serveur de téléfax, ou le serveur d'e-mail étant configuré de telle façon que l'identifiant soit supprimé des ordres d'impression au format EMF transmis du serveur qui ont un identifiant les faisant apparaître en format RAW, que le transfert du fichier au terminal, au téléfax ou à la boîte aux lettres électronique s'effectue après un traitement par le pilote d'impression local, ou après la génération d'un téléfax, respectivement un e-mail, des données se trouvant sur le terminal avec des informations sur l'imprimante utilisée étant transmises, avant le traitement par un pilote d'imprimante, au serveur d'impression, par celui-ci.

16. Réseau basé sur serveurs selon l'une des revendications 13 à 15,
**caractérisé en ce**
**qu'**un serveur d'impression, un serveur de téléfax, ou un serveur d'email est disposé entre le serveur et les terminaux, sur lequel sont enregistrées des données permettant à des moyens de traitement de données disposés dans le serveur d'impression, le serveur de téléfax, ou le serveur d'e-mail de supprimer l'identifiant d'ordres d'impression au format EMF transmis par le serveur qui ont un identifiant les faisant apparaître en format RAW, que le transfert du fichier au terminal, au téléfax, ou à la boîte de lettres électronique s'effectue après un traitement par le pilote d'impression local, ou après la génération d'un téléfax, respectivement un e-mail, des données se trouvant sur le terminal avec des informations sur l'imprimante étant transmises, avant le traitement par un pilote d'impression, au serveur d'impression, par celui-ci.
